# EUROPEAN PATENT SPECIFICATION

(11) **EP 1 689 010 B1**
(45) Date of publication and mention of the grant of the patent: **20.08.2008**
(21) Application number: 06002139.1
(22) Date of filing: 02.02.2006
(51) Int. Cl.: H01M 2/36, A62C 4/00

(54) **Single point battery watering system including battery refill valves incorporating flame arrestors**
Einpunkt-Bewässerungssystem für Batterien mit Flammensicherungsfüllungsventil
Système d'apport d'eau amélioré à point unique pour batterie avec une soupape de remplissage pour arreter les flammes

(30) Priority: 04.02.2005 US 650384 P
(43) Date of publication of application: 09.08.2006
(73) Proprietor: Flow-Rite Controls, Inc., Byron Centre MI 49301 (US)
(72) Inventor: Campau, Daniel N., Ada, MI 49301 (US)
(74) Representative: Casey, Lindsay Joseph

(56) References cited:
- EP-A- 0 501 709
- EP-A- 1 447 865
- GB-A- 2 016 798
- US-A1- 2001 031 390

## Description

The present invention relates generally to single point battery watering systems. More particularly, the present invention relates to an improved refill valve for use in a single point battery watering system that prevents the internal propagation of flames between battery cells during refilling under dry conditions. The refill valve of the present invention performs this function by incorporating a porous internal flame arrestor in the water flow path within the valve.

Lead-acid batteries provide electrical energy by means of an electrochemical reaction that takes place within a plurality of cell units. Each cell unit in a battery contains positive lead dioxide (PbO₂) plates, negative lead (Pb) plates, and an electrolyte comprising sulfuric acid (H₂SO₄) and water (H₂O). Electrical energy is generated during discharging when sulfuric acid reacts with the lead in each plate, thereby forming lead sulfate (PbSO₄) and water. The overall reaction is as follows:

Pb + PbO₂ + 2 H₂SO₄ → 2 PbSO₄ + 2H₂O + Electrical energy

The reverse reaction takes place during re-charging, where the lead in each plate reacts with water and converts back to its original form. The re-charging reaction may also induce electrolysis, a two-step reaction where water is converted to hydrogen (H₂) and oxygen (O₂) gases:

2 H₂O→ 4H⁺ + O₂ + 4 e⁻

4H⁺ + 4e⁻→ 2 H₂

Re-charging and electrolysis lead to water loss in batteries. Additionally, battery cells lose water through evaporation if they are operated under dry conditions. Thus, the cells in many lead-acid batteries must be refilled with water on a regular basis.

The preferred method of refilling lead-acid batteries with water is by the use of single point watering (SPW) systems. Single point watering systems generally comprise a water feed tube that is connected to a plurality of refill valves through a tubing network. Each refill valve in the SPW system is mounted onto a single cell in the battery. The refill valves shut off automatically as soon as the fluid in the cell reaches a predetermined level.

During refilling, the H₂ and O₂ gases that were generated through electrolysis are displaced from the cells. These gases may subsequently ignite and initiate a flame. The flame may then propagate to other cells through the tubing network and cause a ruinous explosion. Thus, as preventive measures, many refill valves contain internal water traps and external flame arrestors.

External flame arrestors are usually located by vent ports outside the refill valves as described in, for example, European Patent specification No 1 447 865. They prevent the external propagation of flames by providing a hypoxic environment where the oxygen to sustain combustion is insufficient. However, external flame arrestors cannot prevent the propagation of flames once gases diffuse into the valves or tubing network. On the other hand, internal water traps provide such prevention means because they are located within refill valves. These traps use retained water in reservoirs to extinguish any generated flame or spark within the SPW system. The water in the traps also prevents intercellular gas diffusion.

Internal water traps function only when they are hydrated. Thus, they are not practical for use under dry conditions because the water in the traps may evaporate. Such dry conditions may include operation in hot weather or in batteries with elevated temperatures. The latter is a frequent situation in installations using new "fast charge" systems, where batteries are charged for short periods at a time and used frequently without a cool down period, thereby resulting in high service temperatures. An additional disadvantage of water traps is that mold or other contaminants may propagate in the traps and lead to fouling of the valves with consequent valve malfunction.

As apparent by the limitations in the prior art, there is an unmet need in preventing the internal propagation of flames between battery cells through single point watering systems. The present invention addresses this unmet need.

### Summary of the invention

According to an aspect of the present invention, there is provided a refill valve as specified in claim 1

Such a design is advantageous because it prevents the internal propagation of flames between battery cells through the battery watering system under dry conditions.

### Brief Description of the Drawings

An embodiment of the invention will now be described with reference to the following detailed description taken in connection with the accompanying drawings in which:
**Fig. 1** is a perspective view of one embodiment of the refill valve of the present invention.
**Fig. 2** is an exploded view which shows the individual components of the refill valve in Fig. 1.
**Fig. 3** shows a simplified cross-sectional view of a refill valve useful in the practice of the present invention.
**Fig. 4** shows a detailed cross-sectional view of the refill valve in Fig. 1.

### Detailed Description of the Preferred Embodiments

Refill valves in single point battery watering systems that utilize a porous internal flame arrestor in the path of the water prevent the internal propagation of flames between battery cells through the tubing network. The use of such flame arrestors in the refill valves of SPW systems is advantageous because it prevents internal flame propagation without requiring frequent hydration. The use of such flame arrestors also eliminates the potential for valve malfunction arising from contaminants found in water traps. The internal flame arrestor of the present invention has the same flame arresting properties as the prior art external flame arrestors and flame arrestors in battery vent plugs. However, it was believed that this type of flame arrestor would be too restrictive to water flow to be used in the water flow path, and that the small pores would become clogged with waterborne debris. On the contrary, the internal flame arrestors of the present invention do not interfere substantially with water flow.

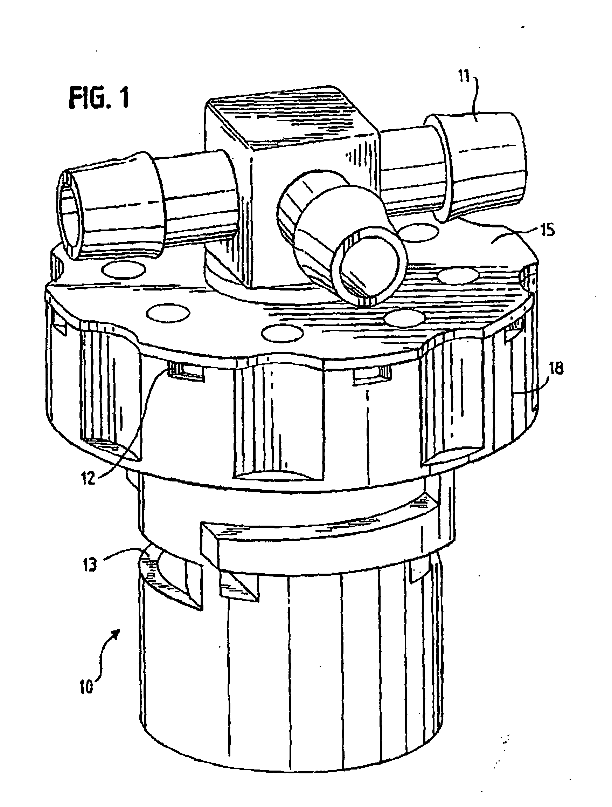

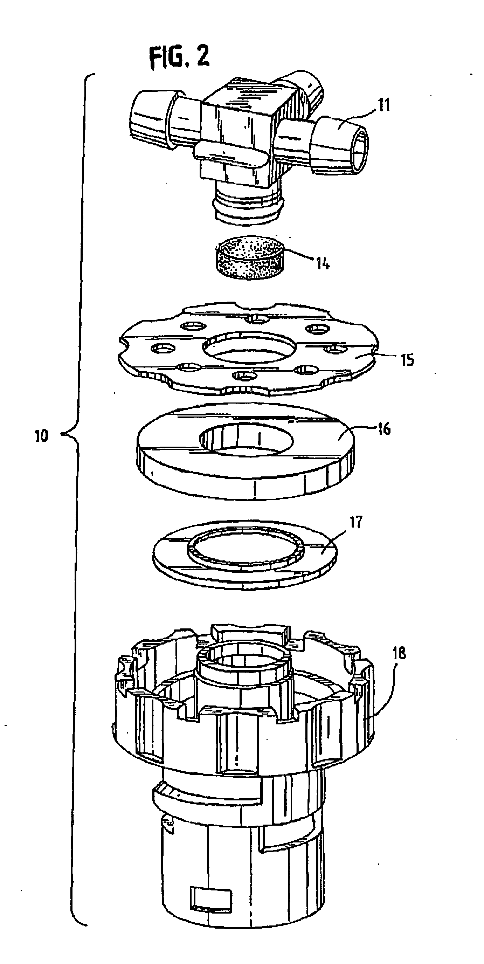

Turning now to Figure 1, a refill valve **10** suitable for use in the present invention is shown. Refill valve **10** contains an internal fluid flow path from the input port of the valve to the output port of the valve. Fluids enter the refill valve at the proximal end through water inlet connector **11** and exit into battery cells at the distal end. The distal end comprises cell gas vent ports **13** for receiving gases that are displaced when the valve is inserted into the cells. These gases enter the refill valve through the ports and exit through cell gas outlet ports **12.** The individual components of refill valve **10,** including a porous internal flame arrestor **14** that is positioned within the fluid flow path, is shown in Figure 2. It is also shown in Figure 2 that the refill valve of the present invention may further comprise an external flame arrestor **16** for preventing external flame propagation.

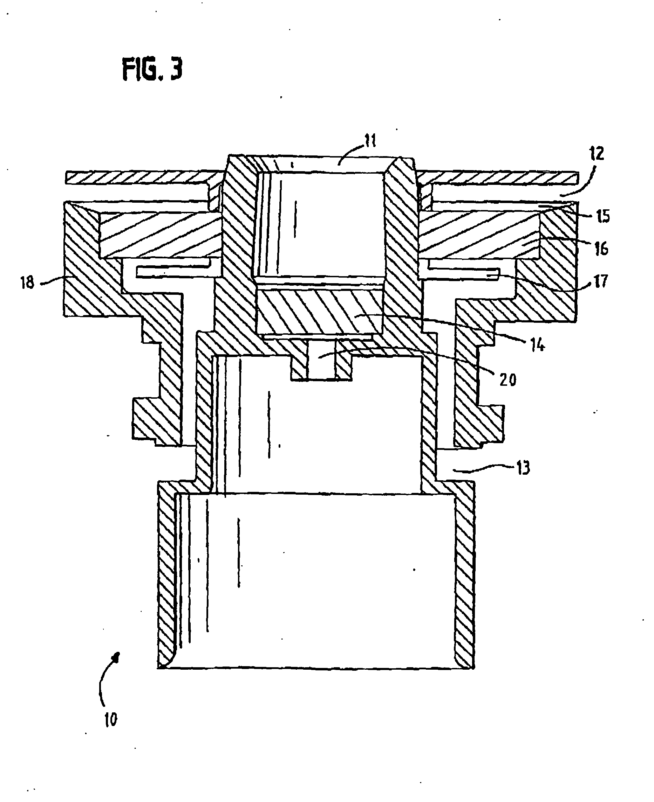

Turning now to Figure 3, a cross-sectional view of a typical refill valve **10** is shown. It is shown that internal flame arrestor **14** is preferably located between water inlet connector **11** and inlet port **20.** It is also shown that external flame arrestor **16** is preferably located in valve cap **18** and held in place by cover **15** and baffle **17.** Such a location ensures that displaced gases that enter cell gas vent ports **13** are exposed to the external flame arrestor before they exit the valve through cell gas outlet ports **12.**

Flame arrestor **14** is preferably a porous disc with a plurality of pores. Preferably, the pores are 90-120 microns (90-120µm) in diameter, and more preferably about 120 microns (120µm) in diameter. The thickness of flame arrestor **14** is preferably less than 1 inch (25.4mm), and more preferably about 1/8 inch (3.175mm) in thickness. It is desirable that the pores comprise about 30-40% of the volume of internal flame arrestor **14**. Internal flame arrestors with pore sizes, porous volumes and thicknesses outside the preferred ranges may also be used in the present invention, as long as they do not substantially block water flow. Likewise, flames arrestors with shapes other than discs (e.g., cubes, balls or cylinders) may be suitable for use in the present invention.

In one embodiment, internal flame arrestor **14** may be composed of one or more ceramic materials, such as aluminum oxide ceramics. In another embodiment, internal flame arrestor **14** may be comprised of a thermoplastic polymer, such as polyvinyl chloride, nylon, fluorocarbon, polyethylene, polyurethane, polystyrene, polypropylene, cellulosic resin, and acrylic resin.

An example of an internal flame arrestor that is suitable for use in the present invention is X-5666, a porous polypropylene flame arrestor by Porex Technologies Corporation. The flame arrestor is a disc with a diameter of 3/8 inch (9.53mm), a thickness of 1/8 inch (3.175mm), a pore size of about 120 microns (120µm), and a porous volume of about 30-40%. The Battery Flame Retardant Venting Systems Test SAE J1495 was used to demonstrate that X-5666 in the refill valves of a single point battery watering system inhibited flame propagation between cells in lead-acid batteries. Other tests have indicated that the internal flame arrestor did not show any signs of degradation or erosion after an equivalent five year of service life at high pressure flow.

Tests have also demonstrated that the X-5666 flame arrestor showed no signs of flow restriction. The water supplied in the tests was tap water, with an inline strainer having an 80 mesh screen, which is typical of industrial water supplies used with single point watering systems. The flow restriction due to this flame arrestor was found to be equivalent to a 1/16 diameter orifice, which is about the size of the refill valve inlet port **20** shown in Figure 3. In addition, the cumulative cross-sectional area of the pores on the internal flame arrestor was estimated to be about 10 times higher than the cross-sectional area of the inlet port **20**.

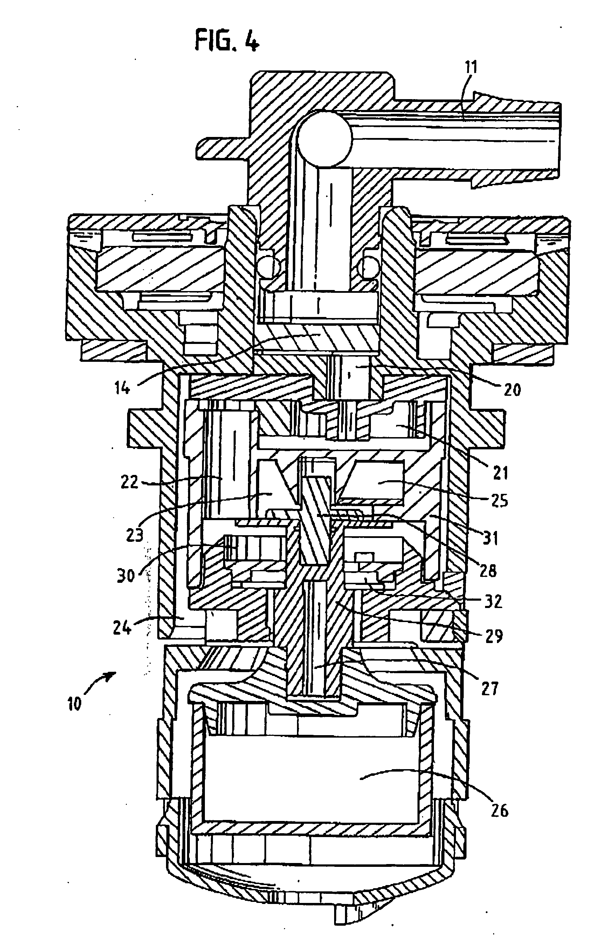

A more detailed cross-sectional view of refill valve **10** is shown in Figure 4. It is shown that fluids enter refill valves through inlet connector **11.** The fluids then flow through internal flame arrestor **14** and inlet port **20** into reservoir **21,** which serves as an internal water trap. Once filled, the fluids in reservoir **21** flows into chamber **22.** The refill valve shown in Figure 4 is in a closed position as occurs when the cells in the battery are filled with fluid. A displacer **26** is directly connected to stem **27** of a valve support assembly. When fluid level is low, the displacer rests in its reset position, which opens both upper valve **28** and lower valve **29.** In this orientation, water is free to flow from chamber **22** to upper and lower valve ports **23** and **30.** The water then flows into the battery cells through opening **24.** Upper valve port **23** also provides another opening **25** that allows water flow to the cells. When the electrolyte level rises sufficiently to lift the displacer **26,** the upper and lower valves are pressed against their respective seats, **31** and **32,** by the pressure of the supply line, blocking further flow into the cell. Such an assembly is described in more detail in U.S. Pat No. 6,227,229 and incorporated into this application by reference.

Though only a single internal flame arrestor is shown in Figures 2-4, a plurality of flame arrestors may also be used in another embodiment of the present invention, as long as the flame arrestors do not interfere substantially with water flow.

The refill valves of the present invention may also be used with different SPW systems. In one embodiment, the SPW system may comprise a plurality of refill valves **10** with water inlet connectors **11,** a single water source, and a tubing network that supplies water to the refill valves through the inlet connectors. Examples of such SPW systems and variations thereof are described in detail in U.S. Pat. Nos. 5,832,946, 5,284,176, 5,482,794, and 5,453,334. The disclosures of these patents are hereby incorporated by reference.

Single point battery watering systems with rigid manifold arrangements may also be used with the refill valves of the present invention. Such SPW systems comprise several rigid manifolds, where each manifold houses a plurality of refill valves. Each manifold also contains a longitudinal water feed tube that places the housed refill valves in fluid communication with one another. In addition, a tubing network places the manifolds in fluid communication with each other and with a water supply tube. SPW systems with such rigid manifold arrangements are disclosed in U.S. Pat. No. 6,782,913, U.S. Pat. No. 6,644,338, and U.S. Pat. App. No. 2004/0161661. These disclosures are also incorporated into this application by reference.

The battery used with the SPW systems of the present invention may be any wet cell battery, preferably a wet cell lead-acid battery, and more preferably a deep cycle lead-acid battery used in fast-charge installations. Though the refill valves of the present invention are preferably used with SPW systems to refill water in battery cells, they may also be used to supply cells with other fluids, such as electrolytes.

It will be evident that there are numerous embodiments of the present invention which, while not expressly described above, are clearly within the scope of the invention. The above description is therefore intended to be exemplary only and the scope of the invention is to be determined solely by the appended claims.

## Claims

1. A refill valve for use in single point battery watering systems to supply battery cells with a liquid, comprising:
a valve structure defining an internal liquid flow path (11, 20-25) from a liquid inlet connector (11) of the valve to an output port of the valve,
a gas vent path (12, 13) external to the liquid flow path, and
a porous flame arrestor (14),
**characterised in that**:
the porous flame arrestor (14) is positioned within said liquid flow pathto prevent the internal propagation of flame between cells of the battery.

2. A valve as claimed in claim 1 wherein the flame arrestor (14) is fabricated from a material selected from the group consisting of polyvinyl chloride, nylon, fluorocarbon, polyethylene, polyolefin, polyurethane, polystyrene, polypropylene, cellulosic resin, and acrylic resin.

3. A valve as claimed in claim 1 wherein the flame arrestor (14) comprises a ceramic material.

4. A valve as claimed in any of claims 1-3 wherein the internal flame arrestor (14) has a pore size of about 120 microns (120µm).

5. A valve as claimed in any of claims 1-4 wherein the internal flame arrestor (14) has a thickness of about 118 inch (3.175mm).

6. A valve as claimed in any of claims 1-5 further comprising an external flame arrestor (16) in the gas vent path.

7. A valve as claimed in any of claims 1-6 further comprising an internal water trap (21).

8. A valve as claimed in any of claims 1-7 further comprising a control device (26) to cause the refill valve to shut off at a predetermined fluid level.

## Patentansprüche

1. Füllventil für die Verwendung in Einpunkt-Batteriebewässerungssystemen, um Batteriezellen mit einer Flüssigkeit zu versorgen, das Folgendes umfasst:
eine Ventilstruktur, die einen internen Flüssigkeitsflusspfad (11, 20-25) von einem Flüssigkeitseinlassanschluss (11) des Ventils zu einer Ausgabeöffnung des Ventils definiert,
einen Gasentlüftungspfad (12, 13), außerhalb des Flüssigkeitsflusspfads, und
eine poröse Flammensicherung (14),
**dadurch gekennzeichnet, dass**:
die poröse Flammensicherung (14) in dem genannten Flüssigkeitsflusspfad positioniert ist, um die interne Ausbreitung von Flammen zwischen Zellen der Batterie zu verhindern.

2. Ventil nach Anspruch 1, wobei die Flammensicherung (14) aus einem Material hergestellt ist, das aus der aus Polyvinylchlorid, Nylon, Fluorkohlenstoff, Polyethylen, Polyolefin, Polyurethan, Polystyrol, Polypropylen, Zelluloseharz und Acrylharz bestehenden Gruppe gewählt wird.

3. Ventil nach Anspruch 1, wobei die Flammensicherung (14) ein Keramikmaterial umfasst.

4. Ventil nach einem der Ansprüche 1-3, wobei die interne Flammensicherung (14) eine Porengröße von ungefähr 120 Mikron (120 µm) hat.

5. Ventil nach einem der Ansprüche 1-4, wobei die interne Flammensicherung (14) eine Dicke von ungefähr 118 Zoll (3,175 mm) hat [*sic*].

6. Ventil nach einem der Ansprüche 1-5, weiter umfassend eine externe Flammensicherung (16) im Gasentlüftungspfad.

7. Ventil nach einem der Ansprüche 1-6, weiter umfassend einen internen Wasserabscheider (21).

8. Ventil nach einem der Ansprüche 1-7, weiter umfassend eine Kontrollvorrichtung (26), um das Füllventil zu veranlassen, bei einem vorherbestimmten Fluidstand zu schließen.

## Revendications

1. Vanne de remplissage destinée à être utilisée dans des systèmes d'apport d'eau à point unique pour batterie afin d'alimenter des cellules de batterie en liquide, comprenant :
une structure de vanne définissant un chemin d'écoulement de liquide interne (11, 20-25), depuis un connecteur d'admission de liquide (11) de la vanne jusqu'à un orifice de sortie de la vanne,
un chemin d'évent de gaz (12, 13) externe au chemin d'écoulement de liquide, et
un pare-flammes poreux (14),
**caractérisée en ce que** :
le pare-flammes poreux (14) est positionné à l'intérieur dudit chemin d'écoulement de liquide pour empêcher la propagation interne d'une flamme entre les cellules de la batterie.

2. Vanne selon la revendication 1, dans laquelle le pare-flammes (14) est fabriqué à partir d'une matière sélectionnée dans le groupe consistant en chlorure de polyvinyle, nylon, fluorocarbone, polyéthylène, polyoléfine, polyuréthane, polystyrène, polypropylène, résine cellulosique, et résine acrylique.

3. Vanne selon la revendication 1, dans laquelle le pare-flammes (14) comprend une matière céramique.

4. Vanne selon l'une quelconque des revendications 1 à 3, dans laquelle le pare-flammes interne (14) a une taille de pores d'environ 120 microns (120 µm).

5. Vanne selon l'une quelconque des revendications 1 à 4, dans laquelle le pare-flammes interne (14) a une épaisseur d'environ 118 pouce (3,175 mm) [*sic*].

6. Vanne selon l'une quelconque des revendications 1 à 5, comprenant en outre un pare-flammes externe (16) dans le chemin d'évent de gaz.

7. Vanne selon l'une quelconque des revendications 1 à 6, comprenant en outre un piège à eau interne (21).

8. Vanne selon l'une quelconque des revendications 1 à 7, comprenant en outre un dispositif de commande (26) pour amener la vanne de remplissage à se fermer à un niveau de fluide prédéterminé.
